# EUROPÄISCHE PATENTSCHRIFT

(11) **EP 3 260 793 B1**
(45) Veröffentlichungstag und Bekanntmachung des Hinweises auf die Patenterteilung: **02.12.2020**
(21) Anmeldenummer: 16187842.6
(22) Anmeldetag: 08.09.2016
(51) Int. Cl.: F24F 13/14, F24F 13/28, F24F 7/00, F24F 7/007, F24F 7/06, F24F 11/00, F24F 12/00, F24F 13/10

(54) **LUFTFÜHRUNGSEINRICHTUNG MIT BIDIREKTIONAL BETREIBBAREN VENTILATOR**
VENTILATION DEVICE WITH BIDIRECTIONALLY OPERATING FAN
APPAREIL DE VENTILATION AVEC SOUFFLEUR BIDIRECTIONNEL

(30) Priorität: 22.06.2016 DE 102016211200
(43) Veröffentlichungstag der Anmeldung: 27.12.2017
(73) Patentinhaber: LUNOS Lüftungstechnik GmbH für Raumluftsysteme, 13593 Berlin (DE)
(72) Erfinder: MERSCHER, Michael, 14612 Falkensee (DE); STECKENBORN, Michael, 12529 Schönefeld (DE)
(74) Vertreter: Eisenführ Speiser

(56) Entgegenhaltungen:
- DE-U1- 20 207 747
- US-A- 2 992 701
- US-B1- 6 916 240

## Beschreibung

Die Erfindung betrifft eine Luftführungseinrichtung sowie ein Lüftungsgerät zur Innenraumbelüftung.

Im Zuge von Energiesparmaßnahmen wird eine energieeffiziente Belüftung von Räumen wie beispielsweise Wohnräumen zunehmend wichtig. Durch Öffnen eines Fensters kann zwar ein Luftaustausch mit der Außenluft erreicht werden, hierbei entweicht bei eingeschalteter Heizung jedoch auch eine große Menge Wärmeenergie oder es strömt bei eingeschalteter Klimaanlage unerwünscht warme Luft in den zuvor aktiv gekühlten Innenraum. Hierdurch muss ein erheblicher zusätzlicher Energieaufwand für Nachheizen oder Nachkühlen aufgewendet werden. Außerdem ist ein geöffnetes Fenster immer mit einer erhöhten Einbruchgefahr verbunden.

Deshalb wurden bereits dezentrale Systeme entwickelt, mit welchen bei der Lüftung eines Raums Wärme rückgewonnen werden kann. Unter "dezentral" ist dabei die Unabhängigkeit von einem installierten Heizungs- oder Kühlsystem zu verstehen. Zur Minimierung des Platzbedarfes wurden bereits dezentrale Systeme auf Basis von bidirektional betreibbaren Ventilatoren entwickelt, wie beispielsweise in DE 10 2011 080 358 sowie in DE 10 2014 200 538 beschrieben. Bei derartigen Systemen ändert der bidirektional betreibbare Ventilator nach vorbestimmten Zeitintervallen seine aktuelle Drehrichtung, insbesondere um einen im System angeordneten Wärmetauscher effizienter zu nutzen, aber auch schlicht zum Wechsel zwischen Be- und Entlüftung.

US 2,992,701 A offenbart eine Luftführungseinrichtung, die in einem Gehäuse zwei Öffnungen zum Ein- und Auslassen der Luft und einen schwenkbaren Luftfilter aufweist. Der schwenkbare Luftfilter ist so ausgebildet, dass er Luft in einen Raum strömen lässt und das Ausströmen der Luft aus dem Raum verhindert.

US 6,916,240 B1 zeigt eine Lüftungseinrichtung zum Lenken eines Luftstroms, die an eine standardmäßige Versorgungsleitung einer Klimaanlage angeschlossen werden kann.

Weitere bekannte Systeme umfassen zusätzlich oder alternativ Außenwand-Luftdurchlässe zur Luftzu- oder abführung, die ohne aktive Lüftungseinrichtungen wie Ventilatoren arbeiten. Im Zusammenspiel können aktive Lüfter und Außenwanddurchlässe entsprechend dem Bedarf Abluft aus dem Innenraum ins Freie oder in Abluftschächte transportieren. Ein damit im Innenraum erzeugter leichter Unterdruck lässt frische Luft durch die Außenwand-Luftdurchlässe gefiltert einströmen.

In vielen Lüftungssystemen kommen Luftfilter zum Einsatz, beispielsweise zur Reinigung der einströmenden Luft von Partikeln. Es ist aus Kostengründen und zur Vermeidung oft komplizierter Aus- und Einbauprozeduren wünschenswert, derartige Luftfilter so selten wie möglich zu wechseln, ohne dass die Filterleistung durch die resultierende längere Betriebszeitspanne des Luftfilters beeinträchtigt wird.

Gemäß einem ersten Aspekt betrifft die Erfindung eine Luftführungseinrichtung zur Führung eines Luftstromes zur Innenraumbelüftung mit den Merkmalen von Anspruch 1.

Bevorzugte Ausführungsformen sind in den abhängigen Ansprüchen definiert.

Der Erfindung liegen folgende Überlegungen zugrunde. Luftfilter in Lüftungsgeräten verschmutzen in der Regel ungleichmäßig, also unterschiedlich stark auf ihrer dem

Innenraum zugewandten Seite und ihrer dem Außenraum zugewandten Seite. Die Schwenkbarkeit der Luftfiltereinheit um eine zur Längsachse des Strömungsraumes senkrechte Achse gemäß der ersten Alternative der erfindungsgemäßen Luftführungseinrichtung ermöglicht es, die Luftfiltereinheit beispielsweise nach einem vorbestimmten Zeitpunkt, wie dem Ende eines standardmäßigen Reinigungsintervalles zu verschwenken und nunmehr die andere Seite der Luftfiltereinheit dem Außenraum zu zuwenden, so dass die Luftfiltereinheit doppelt so lange im Einsatz bleiben kann, bevor eine manuelle Reinigung notwendig wird. Alternativ kann die Luftfiltereinheit je nach konkreter Lüftungssituation auch derart verschwenkt werden, dass sie vom Luftstrom nicht durchströmt wird und somit auch nur einen geringen Widerstand für die Strömung bildet. Damit kann, soweit eine Luftfilterung zeitweise nicht notwendig ist, neben der Vergrößerung des Reinigungsintervalls durch den geringeren Strömungswiderstand auch Energie gespart werden. Luftführungseinrichtungen gemäß der ersten Alternative ermöglichen eine besonders kompakte Bauweise.

Mit der Anordnung der Schwenkachse gemäß der zweiten Alternative wird ebenfalls eine Schwenkbewegung der Luftfiltereinheit aus einem durchströmten Zustand heraus ermöglicht. Hierbei wird die Luftfiltereinheit aus dem Strömungsraum herausgedreht, so dass die gedrehte Luftfiltereinheit zeitweise nicht vom Luftstrom durchströmt wird und dabei keinen Strömungswiderstand darstellt.

Mit der vorliegenden Erfindung wird daher eine Luftführungseinrichtung bereitgestellt, mit der aufwands- und kostensparend ein Wechsel- oder Reinigungsintervall des Luftfilters vergrößert werden kann.

Die vorliegende Beschreibung verwendet zwar nur den Begriff "Auslass". Darunter soll jedoch allgemein eine durchströmbare Öffnung verstanden werden. Sowohl der innenraumseitige Auslass als auch der außenseitige Auslass werden im Betrieb abhängig von der Drehrichtung des jeweiligen bidirektional betreibbaren Ventilators jeweils in einer von zwei möglichen und entgegengesetzten Richtungen durchströmt. Sie fungieren also wahlweise entweder als Einlass oder als Auslass für Luft. Durch die beschriebenen Auslässe kann die Luft also je nach Drehrichtung in das Lüftungsgerät hinein oder aus diesem heraus strömen.

In einer dritten alternativen Ausführungsform betrifft die Erfindung gemäß dem ersten Aspekt der Erfindung eine Luftführungseinrichtung zur Führung eines Luftstroms zur Innenraumbelüftung gemäß Anspruch 5.

Auch mit dieser alternativen Ausführungsform wird eine Luftführungseinrichtung bereitgestellt, mit der die Standzeit von Luftfiltern erhöht werden kann. Über die Schwenkbarkeit der Klappeneinheiten zwischen geschlossener und offener Stellung wird es ermöglicht, immer nur einen der beiden Filter zu durchströmen und nach einem bestimmten Intervall zwischen den Filtern zu wechseln, damit erhöht sich insgesamt die Zeit zwischen zwei Reinigungsintervallen, in denen die Luftfilter gereinigt werden müssen. Der dritten Alternative liegt der Gedanke zu Grunde, dass ein Wechsel zwischen Luftfiltern sowohl über eine schwenkbare Luftfiltereinheit, bei der der jeweilig benötigte Luftfilter in den Luftstrom geschwenkt werden kann also auch über ein Luftfiltersystem mit fest installierten Luftfiltern aber schwenkbaren Klappen, die den jeweiligen Luftfilter zur Durchströmung freigeben, erfolgen kann und auch in dieser Alternative eine kompakte Bauweise der Luftführungseinrichtung ermöglicht wird.

Nachfolgend werden vorteilhafte Ausführungsformen beschrieben.

Die Schwenkachse kann in verschiedenen Ausführungsformen unterschiedlich angeordnet sein. Im Rahmen einer ersten alternativen Ausführungsform, die unter die erste Alternative der erfindungsgemäßen Luftführungseinrichtung fällt, ist die Schwenkachse mittig in Bezug auf einen Luftfilter der Luftfiltereinheit angeordnet. So kann ein Luftfilter geeigneter symmetrischer Form um eine seiner Mittelachsen gedreht werden. Eine alternative Ausführungsform hat die Schwenkachse seitlich am Luftfilter. Diese ist beispielsweise in Verbindung mit einem kreisförmigen Profil des Strömungsraums bei Verwendung einer halbkreisförmigen Filterform vorteilhaft. Allgemein ist die Schwenkachse bei dieser Alternative bevorzugt an einem Ort in Bezug auf den Luftfilter angeordnet, an dem der Luftfilter seine größte Ausdehnung in Richtung der Schwenkachse aufweist. Dadurch wird gewährleistet, dass eine Schwenkbewegung des Filters, insbesondere in einer Ausführungsform der Erfindung, bei der die Luftfiltereinheit bündig an das Gehäuse der Luftführungseinrichtung anschließt, ohne Verkantung möglich ist.

Bei der Anordnung der Schwenkachse gemäß der zweiten Alternative der erfindungsgemäßen Luftführungseinrichtung ist eine Anordnung der Schwenkachse seitlich am Luftfilter notwendig.

In Ausführungsformen der dritten Alternative der Luftführungseinrichtung ist sowohl die Anordnung der Schwenkachse der jeweiligen Klappeneinheit mittig in Bezug auf die Klappeneinheit als auch seitlich an der Klappeneinheit möglich.

In Ausführungsformen, die ein aktives Lüftungsgerät bilden, ist im Strömungsraum der Luftführungseinrichtung ein Ventilator angeordnet, der vorzugsweise bidirektional betreibbar ist. Mit Hilfe dieser Systeme kann Luft aktiv in den Raum oder aus diesem gefördert werden. In alternativen Ausführungsformen der ersten und zweiten Alternative der Luftführungseinrichtung, die einen Außenwanddurchlass bilden, ist kein Ventilator vorgesehen. Als Ventilator wird bevorzugt ein Axialventilator eingesetzt.

Die Luftführungseinrichtung umfasst in einer bevorzugten Ausführungsform zusätzlich einen Wärmetauscher im Strömungsraum. Vorteilhafterweise ist der Wärmetauscher ein einstückiger Gas-Festkörper-Wärmetauscher, der zwischen dem innenraumseitigen und dem außenseitigen Auslass angeordnet ist. Solche Gas-Festkörper-Wärmetauscher weisen typischerweise eine Vielzahl von Kanälen auf, die von der in der Luftführungseinrichtung transportierten Luft durchströmt werden können. Der Festkörper des Gas-Festkörper-Wärmetauschers ist in einer bevorzugten Ausführungsform aus Keramik. Insbesondere Silikatkeramik, wie Tonerdeporzellan oder Cordierit sind geeignete Materialien für den Festkörper. Diese Keramiken verfügen über eine für die Luftströmungsgeschwindigkeit in vielen Einsatzgebieten, insbesondere in der Wohnraumbelüftung ausreichende Wärmeleitfähigkeit und eine hohe spezifische Wärmekapazität. Die Vielzahl von Kanälen des Festkörpers weist bevorzugt eine wabenartige Struktur, insbesondere einen hexagonalen Querschnitt auf. Solche wabenartigen Strukturen geben dem Wärmetauscher eine besonders gute Stabilität. Aber auch runde oder rechteckige Querschnitte der Kanäle sind möglich.

Die erste und/oder die zweite Klappenheit umfassen in einer Ausführungsform des Luftfiltersystems eine Klappe, die auch als nicht durchströmbare Membran bezeichnet werden kann, und die ausgebildet ist in der geschlossenen Stellung den Luftstrom durch den jeweiligen Strömungsunterraum zu blockieren.

In einer Ausführungsform umfasst die Luftfiltereinheit eine um die Schwenkachse schwenkbar gelagerte Filteraufnahme, die zur Aufnahme mindestens eines Luftfilters ausgebildet ist, welcher vorzugsweise lösbar in der Filteraufnahme gehalten ist. In besonders einfachen Ausführungsformen kann die Luftfiltereinheit aber auch allein aus einem um die Schwenkachse schwenkbar gelagerten Luftfilter bestehen. Bei Verwendung einer Filteraufnahme, insbesondere einer Filteraufnahme, in der mindestens ein Luftfilter auswechselbar aufgenommen werden kann, kann ein Tausch des Luftfilters einfacher gestaltet werden als bei direkter Fixierung des Filters im Strömungsraum.

Die Filteraufnahme ist bevorzugt um 360° schwenkbar. Damit kann eine Schwenkbewegung der Filteraufnahme und damit des Filters in gleichbleibender Richtung auch für eine Schwenkbewegung zurück in seine ursprüngliche Position erfolgen. Alternativ kann die Filteraufnahme aber auch nur um 180° schwenkbar sein. Diese Ausführungsform ist besonders vorteilhaft, wenn eine Schwenkbewegung um mehr als 180° aus Gründen der Konstruktion verhindert werden soll, beispielsweise wenn der Winkel der Schwenkbewegung durch Gehäuseteile begrenzt wird.

Als Luftfilter im Sinne der vorliegenden Erfindung werden alle Arten von Luftfiltern verstanden, die für einen Einsatz in Lüftungsgeräten zur Innenraumbelüftung geeignet sind, dies sind insbesondere Partikelfilter, Staubfiter oder Pollenfilter, aber auch Ionisatoren, die zur Ionisation der durchströmenden Luft eingesetzt werden.

Insbesondere ist es vorteilhaft, wenn eine Filteraufnahme zur Aufnahme von mindestens zwei Luftfiltern ausgebildet ist. Die Verwendung einer Filteraufnahme für mindestens zwei Filter erlaubt es, den Luftfilter einer Luftführungseinrichtung zu wechseln ohne aufwändige Umbauten an der Luftführungseinrichtung vornehmen zu müssen. Ein Wechsel zwischen den Luftfiltern kann einfach durch Schwenkbewegung der Filteraufnahme um einen vorbestimmten Winkel erfolgen. In einer Weiterbildung dieser Ausführungsform werden mehrere gleiche Luftfilter verwendet, so dass eine zusätzliche Verlängerung des Reinigungsintervalles erreicht wird, wenn auch ohne zusätzliche Einsparung von Luftfiltern.

In Ausführungsformen der dritten Alternative der Luftführungseinrichtung ist ebenfalls die Verwendung von zwei gleichen Luftfiltern zur Verlängerung des Reinigungsintervalls vorteilhaft. Alternativ sind der Luftführungseinrichtung der dritten Alternative der erste und zweite Luftfilter unterschiedlichen Filtertyps. In einer weiteren Ausführungsform der Luftführungseinrichtung der ersten oder zweiten Alternative umfasst die Luftfiltereinheit mindestens zwei Luftfilter, wobei es sich bei den mindestens zwei Luftfiltern um Luftfilter jeweils unterschiedlichen Filtertyps handelt. Unter Filtertyp wird hier die Art des Filters, wie z.B. Pollenfilter, Staubfilter, Partikelfilter, lonisator oder die Filterklasse verstanden, z.B. Partikelfilter der Klasse G3 oder F5.

Mit den vorgenannten Ausführungsformen ist ein Wechsel zwischen unterschiedlichen Filtertypen abhängig vom Anwendungsfall einfach möglich. So kann zum Beispiel bei erhöhter Feinstaubbelastung eine Umschaltung durch einfache Schwenkbewegung der Luftfiltereinheit oder der Klappeneinheiten zu einem feineren Filter realisiert werden. Es ist darüber hinaus auch möglich, unterschiedliche Filterklassen für Zu- und Abluftmodus der Luftführungseinrichtung vorzusehen.

In einer alternativen Ausführungsform ist statt einem der mindestens zwei Luftfilter in der Luftfiltereinheit eine nicht durchströmbare Membran in der Filteraufnahme angeordnet. Mit dieser Ausführungsform kann ein Verschluss der Luftführungseinrichtung im Bedarfsfall einfach realisiert werden, beispielsweise bei hoher Luftverschmutzung oder Unfällen mit Gasaustritt in der Umgebung.

In einer besonders bevorzugten Ausführungsform umfasst die Luftfiltereinheit eine Filteraufnahme mit genau zwei Filtern, die um 90° versetzt zueinander angeordnet sind und eine gemeinsame Schwenkachse aufweisen, die mittig in jedem der beiden Luftfilter angeordnet ist. Dies ermöglicht neben einem einfachen Wechsel zwischen den beiden Luftfiltern auch eine besonders kompakte Bauweise der Luftführungseinrichtung. Darüber hinaus ist mit dieser Anordnung sichergestellt, dass der jeweils nicht vollflächig durchströmte Luftfilter in Strömungsrichtung ausgerichtet ist und somit nicht durchströmt wird, wenn der jeweils andere Luftfilter vollständig durchströmt wird. Somit kann erreicht werden, dass der aktuell nicht benutzte Luftfilter einen möglichst geringen Strömungswiderstand innerhalb des Strömungsraums bildet.

In einer Ausführungsform der Erfindung bildet die Luftfiltereinheit oder das Luftfiltersystem zumindest einen Teil des innenraumseitigen oder des außenraumseitigen Auslasses. Dies ermöglicht zum einen eine kompakte Bauweise, zum anderen ist damit die Luftfiltereinheit oder das Luftfiltersystem einfacher von außen zugänglich als bei Anordnungen innerhalb des Strömungsraumes zwischen innenraumseitigem und außenseitigem Auslass.

Der Stellantrieb oder der erste und/oder der zweite oder der gemeinsame Stellantrieb ist in einer Ausführungsform der Luftführungseinrichtung ein Motor, insbesondere ein piezoelektrischer Motor. Alternativ ist aber auch die Verwendung einer Magnetspule oder von manuell zu bedienenden Einrichtungen wie beispielsweise eines Handhebels oder Schalters möglich.

In einer Ausführungsform der dritten Alternative der Luftführungseinrichtung verfügen die erste und zweite Klappeneinheit über einen gemeinsamen Stellantrieb, der ausgebildet ist, die Schwenkbewegungen der beiden Klappeneinheiten gleichzeitig zu bewirken. Die Verwendung nur eines gemeinsamen Stellantriebes ermöglicht eine kompakte Bauweise und einen energieeffizienten Betrieb. Der gemeinsame Stellantrieb ist bevorzugt ausgebildet, Schwenkbewegungen der beiden Klappeneinheiten in dieselbe Schwenkrichtung zu bewirken.Gemäß einem zweiten Aspekt betrifft die Erfindung ein Lüftungsgerät, aufweisend eine Luftführungseinrichtung gemäß dem ersten Aspekt der Erfindung oder einer seiner Ausführungsformen. Das Lüftungsgerät weist vorteilhafterweise zusätzlich eine elektronische Steuereinheit auf, die ausgebildet ist, auf den Empfang eines Filtersteuersignals hin den jeweiligen Stellantrieb zu einer Schwenkbewegung der Luftfiltereinheit oder der ersten und zweiten Klappeneinheit um die Schwenkachse um einen durch das Filtersteuersignal vordefinierten Winkel zu veranlassen. Ein derartiges Lüftungsgerät ermöglicht durch die automatische Schwenkbewegung der Luftfiltereinheit um einen vordefinierten Winkel einen automatischen und präzise steuerbaren Betrieb. Der vordefinierte Winkel beträgt in unterschiedlichen bevorzugten Ausführungsformen 180°, 90°, 60° oder 45°. Dabei wird der vordefinierte Winkel beispielsweise als Quotient des Winkels von 180°und der Anzahl der Luftfilter in der Luftfiltereinheit gewählt. Bevorzugt beträgt der vordefinierte Winkel bei der ersten und zweiten Klappeneinheit 180° oder 90°. Damit ist ein Wechsel zwischen offener und geschlossener Stellung konstruktiv einfach möglich ohne weitere abdichtende Bauteile im Luftfiltersystem.

Bevorzugt ist die Steuerungseinrichtung in Ausführungsformen der dritten Alternative der Luftführungseinrichtung ausgebildet, die Schwenkbewegung der ersten und zweiten Klappeneinheit gleichzeitig zu veranlassen. Damit ist ein schneller Wechsel ohne Übergangszeiten zwischen den Strömungsunterräumen möglich und es wird vermieden, dass beide Strömungsunterräume gleichzeitig geschlossen oder offen sind. In alternativen Ausführungsformen ist die Steuereinheit ausgebildet, nur eine Schwenkbewegung der ersten oder zweiten Klappeneinheit zu veranlassen, so dass beide Strömungsunterräume geschlossen oder offen sind. Damit ist es möglich, die Durchströmung der Luftfiltereinheit komplett zu unterbinden, beispielsweise, wenn keine verschmutzte Außenluft eindringen soll oder für einen Durchlüftungsbetrieb den gesamten Strömungsraum zu nutzen. Bevorzugt ist die Steuerungseinrichtung dabei ausgebildet, die Schwenkbewegung der ersten und zweiten Klappenheit in dieselbe Schwenkrichtung zu veranlassen.In einer bevorzugten Ausführungsform weist das Lüftungsgerät eine Steuereinrichtung auf, die ausgebildet ist, das Filtersteuersignal in Reaktion auf ein Informationssignal über einen Betriebszustand des bidirektionalen Ventilators derart auszugeben, dass eine Schwenkbewegung der Luftfiltereinheit oder der ersten und zweiten Klappeneinheit erfolgt, wenn eine Änderung einer Drehrichtung des bidirektionalen Ventilators erfolgt. Dieser Ausführungsform liegen folgende zusätzliche Überlegungen zugrunde. Wenn eingesetzte Luftfilter nur in einer Richtung durchströmt werden, kann besser verhindert werden, dass bereits gefilterte Partikel oder Schadstoffe bei Wechsel der Strömungsrichtung zurück in den Ursprungsraum gelangen. Diese Ausführungsform des erfindungsgemäßen Lüftungsgerätes entfaltet also besondere Vorteile. Sie ermöglicht es, durch Schwenkbewegung der Luftfiltereinheit oder der Klappeneinheiten die jeweiligen Luftfilter auch bei einem Wechsel der Drehrichtung des bidirektional betreibbaren Ventilators immer in gleicher Richtung durchströmen zu lassen.

Bevorzugt weist das Lüftungsgerät in dieser Ausführungsform zusätzlich eine Ventilatorsteuereinheit auf, die ausgebildet ist, auf den Empfang eines entsprechenden Steuersignals der Steuereinrichtung hin, die Drehrichtung des Ventilators nach einer vorbestimmten Taktzeit umzukehren. Die Taktzeit für die Drehrichtungsänderung des Ventilators der Luftführungseinrichtung liegt bevorzugt im Bereich von 50 bis 70 Sekunden, besonders bevorzugt bei ca. 50 Sekunden.

Das Informationssignal über den Betriebszustand des Ventilators ist der Steuereinrichtung beispielsweise von einem in den Ventilator integrierten oder mit diesem verbundenen Betriebszustandssensor oder von einer zweiten Steuereinrichtung übermittelbar, oder aber die Steuereinrichtung selbst ist zusätzlich zur Steuerung des Ventilators ausgebildet und verfügt somit über das Informationssignal über den Betriebszustand des Ventilators - das Informationssignal wird also von der Steuereinrichtung selbst bereitgestellt.

In einer weiteren Ausführungsform ist die Steuereinheit ausgebildet, das Filtersteuersignal auf eine manuelle Eingabe hin auszugeben. Dies ist insbesondere vorteilhaft, wenn der Nutzer den Einsatz eines anderen Luftfilters, beispielsweise eines Pollenfilters akut benötigt.

In einer besonders bevorzugten Ausführungsform weist das erfindungsgemäße Lüftungsgerät eine Luftführungseinrichtung mit einer Filteraufnahme mit genau zwei Filtern auf, die um einen Winkel von 90° bezüglich der Schwenkachse zueinander angeordnet sind, und die eine gemeinsame Schwenkachse aufweisen, die mittig in jedem der beiden Luftfilter angeordnet ist. Der vordefinierte Winkel beträgt hier 90°. Diese Ausführungsform stellt eine Balance zwischen dem Wunsch nach mehreren automatisch auswechselbaren Filtern, der Forderung, diese derart anzuordnen, dass jeweils nicht vollflächig durchströmte Luftfilter einen möglichst geringen Strömungswiderstand bilden, und einer möglichst kompakten Bauweise dar.

In einer weiteren Ausführungsform ist die Steuereinrichtung ausgebildet, das Filtersteuersignal zu vordefinierten Zeitpunkten auszugeben, beispielsweise nach Ablauf eines vorbestimmten Zeitintervalls, das am Zeitpunkt der Inbetriebnahme des Lüftungsgeräts beginnt, oder zu einem anders vorbestimmten Zeitpunkt. Die Steuereinrichtung ist in manchen Varianten ausgebildet, die Schwenkbewegung der Luftfiltereinheit oder der ersten und zweiten Klappeneinheit am Ende eines vorbestimmten Zeitintervalls, beispielsweise eines vordefinierten Filterreinigungs-Zeitintervalls für die Luftfiltereinheit oder das Luftfiltersystem, automatisch zu veranlassen. In einer solchen Variante ist beispielsweise am Ende des Filterreinigungs-Zeitintervalls ein Verschwenken um 180° vorprogrammiert. In einer anderen Variante ist ein Filterwechsel zwischen unterschiedlichen, in die Filtereinheit integrierten Filtern durch Schwenkbewegung einer entsprechend ausgebildeten Luftfiltereinheit um 90° vorgesehen, beispielsweise von einem normalen Staubfilter zu einem Pollenfilter. Diese Variante ist ein Beispiel dafür, dass ein vordefinierter Zeitpunkt für die Erzeugung und Ausgabe des Filtersteuersignals auch direkt in Form von Datum und/oder Uhrzeit bestimmt sein kann, wie beispielsweise automatisch zu kalendarischem Beginn des Frühlings, oder täglich um 1 Uhr nachts. In einer weiteren Variante erfolgt der Filterwechsel durch Schwenken der ersten und zweiten Klappeneinheit, sodass eine der Klappeneinheiten von der geschlossenen in die offene Stellung geschwenkt wird und die andere von der offenen in die geschlossene Stellung, sodass der jeweils durchströmte Filter gewechselt wird.

In einer weiteren Ausführungsform ist die Steuereinrichtung ausgebildet, das Filtersteuersignal in Reaktion auf den Empfang eines Schwellwertsignales eines Sensors hin auszugeben. Ein solcher Sensor ist ausgebildet, eine Sensor-Messgröße, beispielsweise eine bestimmte Schadstoffkonzentrationen der Außenluft zu erfassen. Die Steuereinrichtung ist ausgebildet, ein entsprechendes Schwellwertsignal ausgeben, wenn der erfasste Wert der Sensor-Messgröße einen vordefinierten Schwellwert erreicht, also je nach Situation überschreitet oder unterschreitet. Dies ist besonders vorteilhaft bei Ausführungsformen der Luftführungseinrichtung, bei der unter mehreren zur Verfügung stehenden Filtern der Luftfiltereinheit etwa eine nicht durchströmbaren Membran oder ein Luftfilter einer hohen Filterklasse zu- oder weggeschaltet werden kann. Damit ist eine Schwenkbewegung der Luftfiltereinheit derart möglich, dass situationsabhängig beispielsweise durch die nicht durchströmbare Membran die Luftführungseinrichtung verschlossen wird oder ein Luftfilter einer stärkeren Filterklasse in den Luftstrom gedreht wird.

In einer weiteren Ausführungsform ist die Steuereinrichtung ausgebildet, ein Reinigungssteuersignal auszugeben, und die Steuereinheit ist ausgebildet, auf den Empfang des Reinigungssteuersignales hin den Stellantrieb zu einer Mehrzahl von Schwenkbewegungen der Luftfiltereinheit in jeweils wechselnde Richtungen in kurzer Abfolge zu veranlassen. Mit dieser Schwenkbewegung der Luftfiltereinheit wird ein "Ausklopfen" und damit eine Zwischenreinigung der Luftfiltereinheit erreicht. Die Schwenkbewegung wird bevorzugt schnell durchgeführt, oder es wird durch Verwenden eines Anschlags ein Klopfimpuls erzielt. Auch hiermit kann die Zeit zwischen zwei Reinigungen, bei denen Luftfilter aus dem Lüftungsgerät ausgebaut werden müssen, vergrößert werden.

In einem weiteren Aspekt betrifft die Erfindung ein Doppel-Lüftungsgerät aufweisend eine erste und eine zweite Luftführungseinrichtung, jeweils nach der ersten oder zweiten Alternative gemäß dem ersten Aspekt der Erfindung oder einem ihrer Ausführungsbeispiele, und eine elektronische Steuereinheit, die ausgebildet ist, auf den Empfang eines Filtersteuersignals hin eine jeweilige Schwenkbewegung der jeweiligen Luftfiltereinheit der ersten und der zweiten Luftführungseinrichtung durch den jeweiligen Stellantrieb gleichzeitig um einen durch das Filtersteuersignal vordefinierten Winkel zu veranlassen.

Derartige Doppel-Lüftungsgeräte bieten die Möglichkeit Zu- und Abluft oder auch größere Luftströme auf kleinem Bauraum und mit nur einem Wanddurchbruch zu realisieren.

In einer bevorzugten Ausführungsform weist das Doppel-Lüftungsgerät eine Ventilatorsteuereinheit auf, die ausgebildet ist, auf den Empfang eines entsprechenden Steuersignals hin den ersten und den zweiten Ventilator zu einem Gegentaktbetrieb mit entgegengesetzter Drehrichtung zu veranlassen.

Desweiteren weist das Doppel-Lüftungsgerät bevorzugt einen einstückigen Gas-Festkörper-Wärmetauscher, dessen Festkörper sich in der ersten und in der zweiten Luftführungseinrichtung erstreckt, in beiden Luftführungseinrichtungen zwischen dem jeweiligen innenraumseitigen und dem außenseitigen Auslass angeordnet ist, eine Vielzahl von Kanälen aufweist und ausgebildet ist, den ersten Luftstrom den zweiten Luftstrom in einer jeweiligen Teilmenge von Kanälen fluidisch getrennt, jedoch thermisch gekoppelt zu führen, wobei der Festkörper in der ersten und der zweiten Luftführungseinrichtung jeweils zusätzlich einen Regenerator bildet. Derartige Lüftungsgeräte ermöglichen eine besonders kompakte Bauweise und sind besonders effizient.

Bevorzugt sind die Luftfiltereinheiten der ersten und zweiten Luftführungseinrichtung dabei gleich aufgebaut, werden aber wie auch die Ventilatoren im Gegentaktbetrieb eingesetzt, so dass beispielsweise bei einer Luftfiltereinheit mit zwei Luftfiltern unterschiedlichen Typs in derjenigen Luftführungseinrichtung, die gerade im Zuluftbetrieb arbeitet, immer ein Luftfilter eines ersten Typs durchströmt wird und in derjenigen Luftführungseinrichtung, die gerade im Abluftbetrieb arbeitet, immer ein Luftfilter eines zweiten Typs.

In einer Ausführungsform verfügen die erste und zweite Luftführungseinrichtung über einen gemeinsamen Stellantrieb, der ausgebildet ist, die Schwenkbewegungen der beiden Luftfiltereinheiten gleichzeitig zu bewirken. Die Verwendung nur eines gemeinsamen Stellantriebes ermöglicht eine kompakte Bauweise und einen energieeffizienten Betrieb. Die Steuereinheit ist in einer weiteren Ausführungsform ausgebildet, die Schwenkbewegungen der beiden Luftfiltereinheiten in dieselbe Schwenkrichtung zu veranlassen.

In einer bevorzugten Ausführungsform weist das Doppel-Lüftungsgerät eine Steuereinrichtung auf, die ausgebildet ist, das Filtersteuersignal in Reaktion auf ein Informationssignal über einen Betriebszustand des jeweiligen bidirektionalen Ventilators derart auszugeben, dass eine Schwenkbewegung der jeweiligen Luftfiltereinheit der ersten und der zweiten Luftführungseinrichtung erfolgt, wenn eine Änderung einer Drehrichtung des jeweiligen bidirektionalen Ventilators der ersten und der zweiten Luftführungseinrichtung erfolgt. Diese Ausführungsform ermöglicht es durch Schwenkbewegung der Luftfiltereinheit diese auch bei einem Wechsel der Drehrichtung des jeweiligen bidirektional betreibbaren Ventilators immer in gleicher Richtung durchströmen zu lassen.

Das Informationssignal über den Betriebszustand des jeweiligen Ventilators wird der Steuereinrichtung dabei beispielsweise von einem Betriebszustandssensor oder von einer zweiten Steuereinrichtung übermittelt oder aber die Steuereinrichtung selbst ist auch zur Steuerung des jeweiligen Ventilators oder beider Ventilatoren ausgebildet und verfügt somit über die Information über den Betriebszustand des Ventilators. Das Informationssignal wird also von der Steuereinrichtung selbst bereitgestellt. Bevorzugt weist das Lüftungsgerät dabei zusätzlich eine Ventilatorsteuereinheit auf, die ausgebildet ist, auf den Empfang eines entsprechenden Steuersignals der Steuereinrichtung hin, die Drehrichtung des ersten und des zweiten Ventilators nach einer vorbestimmten Taktzeit umzukehren. Die Taktzeit für die Drehrichtungsänderung des Ventilators jeder Luftführungseinrichtung beträgt bevorzugt ca. 50 Sekunden.

In einer weiteren Ausführungsform des Doppel-Lüftungsgerätes ist die Steuereinrichtung ausgebildet, das Filtersteuersignal nach einem vorbestimmten Zeitintervall beginnend zum Zeitpunkt der Inbetriebnahme oder zu einem vorbestimmten Zeitpunkt auszugeben. Mit einer derartigen Steuereinrichtung ist es möglich die Schwenkbewegung der jeweiligen Luftfiltereinheit nach einem vorbestimmten Zeitintervall, beispielsweise einem Reinigungsintervall für die Luftfiltereinheit automatisch zu veranlassen oder ein Filterwechsel durch Schwenkbewegung um 90°, beispielsweise zu einem Pollenfilter, automatisch zu Beginn des Frühlings zu veranlassen. In einer weiteren Ausführungsform ist die Steuereinrichtung ausgebildet, das Filtersteuersignal auf den Empfang eines Schwellwertsignales eines Sensors hin auszugeben. Ein solcher Sensor kann beispielsweise Schadstoffkonzentrationen der Außenluft erfassen und auf ein entsprechendes Schwellwertsignal hin ist damit eine Schwenkbewegung der Luftfiltereinheit derart möglich, dass beispielsweise durch die nicht durchströmbare Membran die Luftführungseinrichtung verschlossen wird oder ein Luftfilter einer stärkeren Filterklasse in den Luftstrom gedreht wird.

In einer weiteren Ausführungsform ist die Steuereinrichtung ausgebildet, ein Reinigungssteuersignal auszugeben und die Steuereinheit ist ausgebildet auf den Empfang des Reinigungssteuersignales hin den Stellantrieb zu einer Mehrzahl von Schwenkbewegungen der Luftfiltereinheit in jeweils wechselnde Richtungen in kurzer Abfolge zu veranlassen. Mit dieser Schwenkbewegung der Luftfiltereinheit wird ein "Ausklopfen" und damit eine Zwischenreinigung der Luftfiltereinheit erreicht. Die Schwenkbewegung wird bevorzugt schnell durchgeführt, oder es wird durch Verwenden eines Anschlags ein Klopfimpuls erzielt. Auch hiermit kann die Zeit zwischen zwei Reinigungen, bei denen Luftfilter aus dem Lüftungsgerät ausgebaut werden müssen, vergrößert werden.

Weitere Ausführungsbeispiele sind den Ansprüchen zu entnehmen.

Nachfolgend werden weitere Ausführungsbeispiele der Luftführungseinrichtung sowie des Lüftungsgeräts anhand der Zeichnungen beschrieben. Es zeigen:
Fig. 1a eine schematische Darstellung eines Ausführungsbeispiels einer Luftführungseinrichtung zur Innenraumbelüftung gemäß der Erfindung in einer Draufsicht;
Fig. 1b eine schematische Darstellung der Luftführungseinrichtung aus Fig. 1a in einer Schnittansicht entlang A-A;
Fig. 2a eine schematische Darstellung eines weiteren Ausführungsbeispiels eines Lüftungsgerätes in einer Draufsicht;
Fig. 2b eine schematische Darstellung des Lüftungsgerätes aus Fig. 2a in einer Schnittansicht entlang A-A;
Fig. 3a eine schematische Darstellung eines Ausführungsbeispiels eines erfindungsgemäßen Doppel-Lüftungsgerätes in einer Draufsicht;
Fig. 3b eine schematische Darstellung des Doppel-Lüftungsgerätes aus Fig. 3a in einer Schnittansicht entlang A-A;
Fig. 3c eine weitere schematische Darstellung des Ausführungsbeispiels eines Doppel-Lüftungsgerätes aus Fig. 3a in einer Draufsicht;
Fig. 3d eine schematische Darstellung des Doppel-Lüftungsgerätes aus Fig. 3c in einer Schnittansicht entlang A-A;
Fig. 4a eine schematische Darstellung eines weiteren Ausführungsbeispiels eines Doppel-Lüftungsgerätes
Fig. 4b eine schematische Darstellung des Doppel-Lüftungsgerätes aus Fig. 4a in einer Schnittansicht entlang A-A;
Fig. 5 eine schematische Darstellung eines Ausführungsbeispiels einer Luftführungseinrichtung zur Innenraumbelüftung gemäß der dritten Alternative in einer Draufsicht.

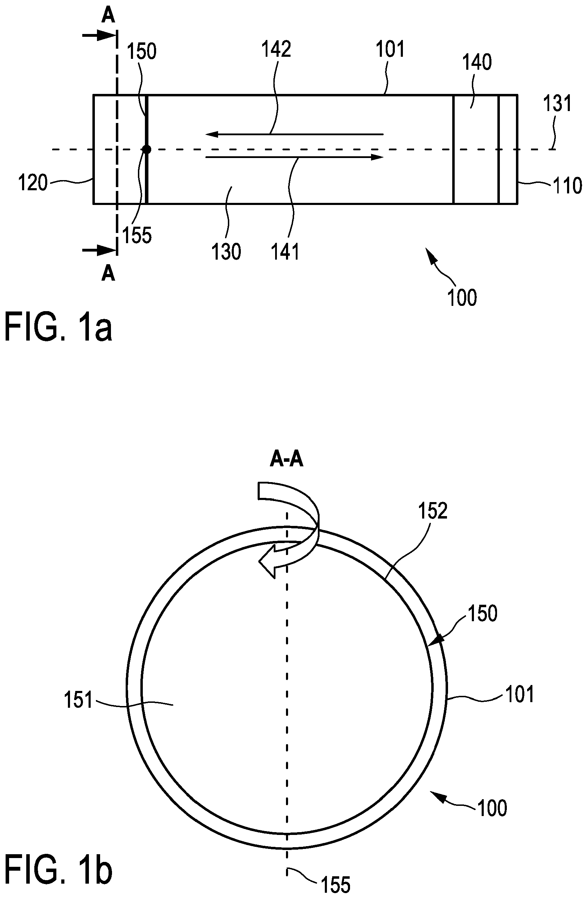

Fig. 1a zeigt in einer schematischen Darstellung in der Draufsicht eine Luftführungseinrichtung 100 zur Innenraumbelüftung mit einem Gehäuse 101, einem innenraumseitigen Auslass 110, einem außenseitigen Auslass 120 und einem Strömungsraum 130, der sich entlang einer Längsachse 131 vom innenraumseitigen Auslass 110 zum außenseitigen Auslass 120 erstreckt und in dem ein bidirektional betreibbarer Ventilator 140 angeordnet ist. Andere (hier nicht näher dargestellte) Ausführungsformen der Luftführungseinrichtungen sind als Außenwand-Luftdurchlass ohne aktive Fördereinrichtung, also ohne Ventilator, ausgebildet. Die Luftführungseinrichtung weist eine um eine Schwenkachse 155 schwenkbar gelagerte Luftfiltereinheit 150 auf, wobei die Schwenkachse 155 senkrecht zur Längsachse 131 des Strömungsraumes 130 angeordnet ist. Die Luftfiltereinheit 150 ist mit einem Stellantrieb (hier nicht dargestellt) zur Schwenkbewegung der Luftfiltereinheit um die Schwenkachse 155 verbunden. Der bidirektional betreibbare Ventilator 140 ist ausgebildet und angeordnet, einen Luftstrom mit den Strömungsrichtungen 141 oder 142 zu fördern. Je nach Strömungsrichtung dient entweder der innenraumseitige Auslass oder der außenseitige Auslass als Einlass oder Auslass für den Luftstrom.

In der gezeigten Ausführungsform ist die Luftfiltereinheit als eine Filteraufnahme 152 zur Aufnahme eines Filters mit einem Luftfilter 151 ausgebildet, wie nachfolgend in Bezug auf Fig. 1b weiter erläutert wird. Fig. 1b zeigt in einer schematischen Darstellung die Luftfiltereinheit 150 der Luftführungseinrichtung 100 aus Fig. 1a in einer Schnittansicht entlang der Schnittebene A-A. Die Luftfiltereinheit 150 umfasst eine Filteraufnahme 152, in der der Luftfilter 151 angebracht ist. Die Schwenkachse 155 verläuft mittig in Bezug auf den Filter. Die Luftfiltereinheit 150 ist schwenkbar im Gehäuse 101 gelagert. Die Filteraufnahme 152 ist hier um 360° schwenkbar. In der gezeigten Position wird der Luftfilter 151 vom durch den Ventilator 140 geförderten Luftstrom vollflächig durchströmt. Wird die Luftfiltereinheit 150 um 90° gedreht, so ist die Luftfiltereinheit 150 und damit der Luftfilter 151 in Strömungsrichtung ausgerichtet und bildet nur einen geringen Widerstand für den Luftstrom. Der Luftfilter 151 wird nicht mehr vollflächig durchströmt. Mit dieser Ausführungsform kann bei Kopplung der Ausrichtung des Filters 151 an die Drehrichtung des Ventilators 140 sichergestellt werden, dass der Luftfilter immer nur in einer Richtung durchströmt wird. Ist eine beidseitige Durchströmung des Filters 151 gewünscht so kann die Luftfiltereinheit 150 um 180° aus der gezeigten Position gedreht werden, so dass der Luftstrom immer in derselben Richtung durch den Luftfilter 151 erfolgt. Dies ist besonders vorteilhaft, wenn eine Filterung sowohl der Zuluft als auch der Abluft erfolgen soll. In der gezeigten Ausführungsform schließt die Filteraufnahme 152 nicht bündig am Gehäuse der Luftführungseinrichtung 100 an. In einer alternativen Ausführungsform, die vorliegend nicht gezeigt ist, ist die Filteraufnahme bündig zum Gehäuse, beispielsweise mit einer umlaufenden Gummilippe zur Abdichtung, bei Aufrechterhaltung der Schwenkbarkeit, ausgeführt.

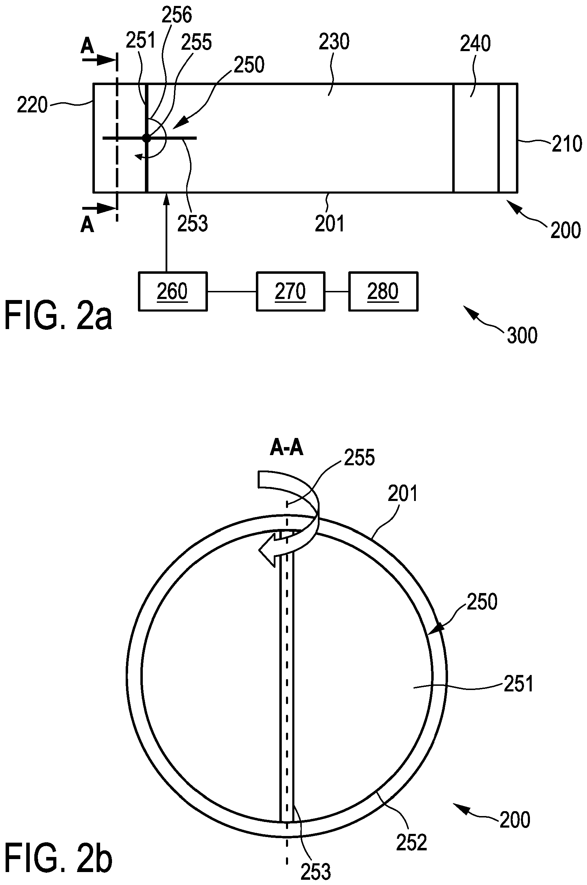

Fig. 2a zeigt in einer schematischen Darstellung in der Draufsicht eine Ausführungsform eines Lüftungsgerätes 300 mit einer Luftführungseinrichtung 200 zur Innenraumbelüftung mit einem Gehäuse 201, einem innenraumseitigen Auslass 210, einem außenseitigen Auslass 220 und einem Strömungsraum 230, der sich entlang einer Längsachse 231 vom innenraumseitigen Auslass 210 zum außenseitigen Auslass 220 erstreckt und in dem ein bidirektional betreibbarer Ventilator 240 angeordnet ist. Die Luftführungseinrichtung 200 weist eine um eine Schwenkachse 255 schwenkbar gelagerte Luftfiltereinheit 250 auf, wobei die Schwenkachse 255 senkrecht zur Längsachse 231 des Strömungsraumes 230 angeordnet ist. Desweiteren ist die Luftfiltereinheit 250 mit einem Stellantrieb 260 zur Schwenkbewegung der Luftfiltereinheit 250 um die Schwenkachse 255 verbunden.

Darüber hinaus weist das Lüftungsgerät 300 eine elektronische Steuereinheit 270 auf, die ausgebildet ist, auf den Empfang eines Filtersteuersignals hin den Stellantrieb zu einer Schwenkbewegung der Luftfiltereinheit 250 durch um einen durch das Filtersteuersignal vordefinierten Winkel zu veranlassen sowie eine Steuereinrichtung 280, die ausgebildet ist, das Filtersteuersignal in Reaktion auf ein Informationssignal über einen Betriebszustand des bidirektionalen Ventilators derart auszugeben, dass eine Schwenkbewegung der Luftfiltereinheit 250 erfolgt, wenn eine Änderung einer Drehrichtung des bidirektionalen Ventilators 240 erfolgt.

Die nachfolgende Beschreibung konzentriert sich auf die Unterschiede zwischen der Ausführungsform der Luftführungseinrichtung 200 der Fig. 2a und der Luftführungseinrichtung 100 der Fig. 1a. Im Unterschied zur Luftführungseinrichtung der Fig. 1a weist in der Ausführungsform der Fig. 2a die Luftfiltereinheit 250 eine Filteraufnahme 252 auf, die zur Aufnahme von zwei Luftfiltern 251, 253 ausgebildet ist. Die Luftfilter 251, 253 sind um 90° versetzt zueinander angeordnet und weisen eine gemeinsame Schwenkachse 255 auf. Diese Schwenkachse 255 ist mittig in jedem der beiden Luftfilter 251, 253 angeordnet. Bei dieser Anordnung wird jeweils ein Filter, hier Luftfilter 251, vom Luftstrom im Strömungsraum 230 vollflächig durchströmt, während der andere Filter, hier Luftfilter 253, in Strömungsrichtung ausgerichtet ist und so einen minimalen Strömungswiderstand bildet. Eine Schwenkbewegung der Filteraufnahme 252 um 90° in der angezeigten Schwenkrichtung 256 und damit ein Wechsel zwischen den Luftfiltern 251, 253 kann hier entweder nach einem vorbestimmten Reinigungzeitintervall oder in Abhängigkeit der Steuerung und damit des Betriebszustandes des bidirektionalen Ventilators 240 mit Hilfe einer nicht gezeigten Steuerungseinrichtung und Steuereinheit eines erfindungsgemäßen Lüftungsgerätes durchgeführt werden. Damit ermöglicht die gezeigte Ausführungsform der Luftführungseinrichtung 200 sowohl längere Reinigungsintervalle als auch die Sicherstellung der Durchströmung des jeweiligen Filters 251, 253 in nur jeweils einer Strömungsrichtung. In der gezeigten Ausführungsform handelt es sich bei den Luftfiltern 251, 253 um Partikelfilter gleichen Typs. In alternativen Ausführungsform sind die Filter 251, 253 unterschiedlichen Typs, so dass für zu und Abluft unterschiedliche Filtertypen eingesetzt werden können und beispielsweise eine stärkere Filterung der Zuluft erreicht wird.

Fig. 2b zeigt in einer schematischen Darstellung in der Schnittebene A-A eine Seitenansicht der Luftführungseinrichtung 200. Die Luftfiltereinheit 250 ist am Gehäuse 201 schwenkbar gelagert, und weist eine Filteraufnahme 252 mit einem Luftfilter 251 der vollflächig zu sehen ist und einem zweiten Luftfilter 253, von dem nur die schmale Seite zu erkennen ist auf. Die Schwenkachse 255 verläuft durch beide Luftfilter 251, 253 mittig.

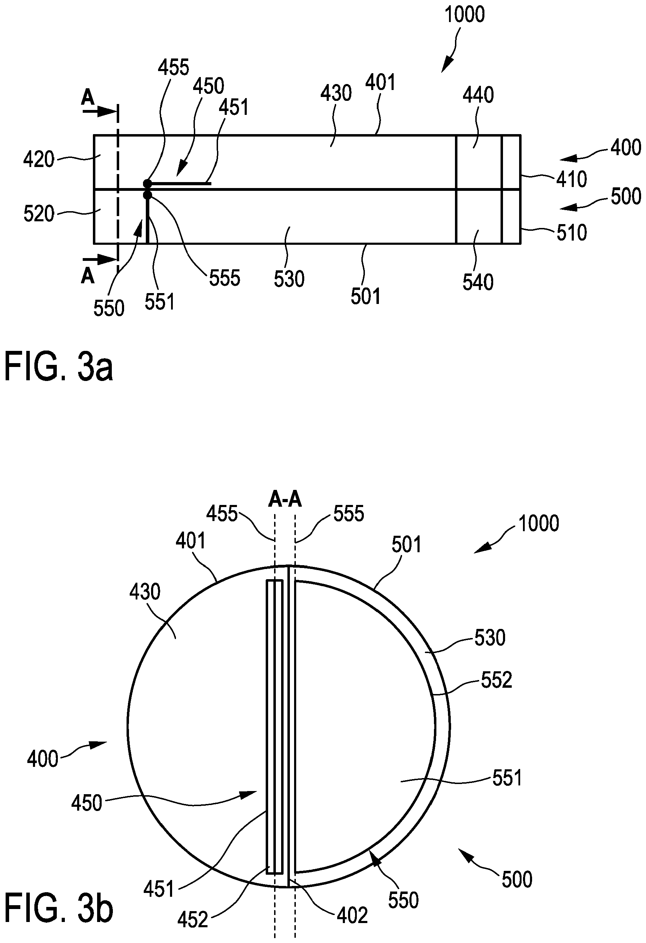

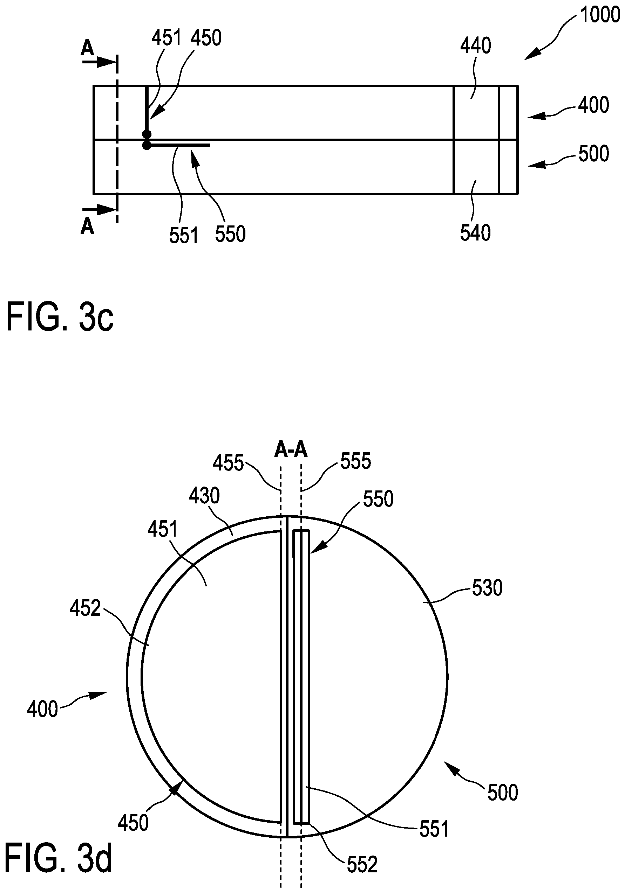

In den Fig. 3a bis 3d ist eine Ausführungsform eines erfindungsgemäßen Doppel-Lüftungsgerätes 1000 mit einer ersten Luftführungseinrichtung 401, einer zweiten Luftführungseinrichtung 500. dargestellt. Fig. 3a zeigt das Doppel-Lüftungsgerät 1000 in einem ersten Betriebszustand in schematische Darstellung in der Draufsicht. Das Doppel-Lüftungsgerät 1000 umfasst eine erste Luftführungseinrichtung 400 mit einem innenraumseitigen Auslass 410 und einem außenseitigen Auslass 420 sowie einem im Strömungsraum 430 angeordneten bidirektional betreibbaren Ventilator 440. Die zweite Luftführungseinrichtung 500 ist insoweit identisch zur ersten Luftführungseinrichtung 400 aufgebaut. Sie umfasst ebenfalls einen innenraumseitigen Auslass 510 einen außenseitigen Auslass 520 sowie einen im Strömungsraum 530 zwischen innenraumseitigen Auslass 510 und außenseitigem Auslass 520 angeordneten Ventilator 540. Die Ventilatoren 440 und 540 werden im Gegentaktbetrieb betrieben. Die erste und zweite Luftführungseinrichtung 400, 500 weisen darüber hinaus jeweils eine Luftfiltereinheit 450, 550 auf, die um Ihre jeweilige Schwenkachse 455, 555 schwenkbar gelagert sind. Die Schwenkachsen 455, 555 sind dabei seitlich in Bezug auf den jeweiligen Luftfilter 451, 551 der Luftfiltereinheit angeordnet. Beide Luftfiltereinheiten 450, 550 sind in der gezeigten Ausführungsform mit einem hier nicht dargestellten gemeinsamen Stellantrieb zur Schwenkbewegung der Luftfiltereinheiten 450, 550 verbunden. Desweiteren weist das Lüftungsgerät eine (hier nicht dargestellte) Steuereinheit auf, die ausgebildet ist, auf den Empfang eines Filtersteuersignales hin, eine jeweilige Schwenkbewegung der jeweiligen Luftfiltereinheit 450, 550 durch den Stellantrieb gleichzeitig um einen durch das Filtersteuersignal vordefinierten Winkel zu veranlassen. Wie nachfolgend im Hinblick auf Fig. 3c weiter erläutert wird, beträgt der vordefinierte Winkel in dieser Ausführungsform des Lüftungsgerätes 90°. Wie in Fig. 3a zu erkennen ist, wird der Luftfilter 551 der zweiten Luftführungseinrichtung 500 im gezeigten Betriebszustand vollflächig durchströmt, während der Luftfilter 451 aus der Strömung gedreht ist, also in Strömungsrichtung ausgerichtet ist und damit einen geringen Strömungswiderstand bildet.

Diese Ausführungsform des Doppel-Lüftungsgerätes ist in Fig. 3b in der Schnittansicht entlang der Schnittebene A-A gezeigt. Hier ist insbesondere zu erkennen, dass die beiden Luftfiltereinheiten 550,450 um die jeweiligen Schwenkachsen 455,555 schwenkbar am jeweiligen Gehäuse 401, 501 gelagert sind. In der gezeigten Ausführungsform sind die beiden Gehäuse 401, 501 einstückig als ein gemeinsames Gehäuse für beide Luftführungseinrichtungen 400, 500 gefertigt. Die Strömungsräume 430, 530 sind durch einen Mittelsteg 402 des Gehäuses an dieser Stelle voneinander getrennt. Beide Luftfiltereinheiten 450, 550 weisen jeweils einen Luftfilter 451, 551 auf.

Die Fig. 3c und 3d zeigen diese Ausführungsform des Doppel-Lüftungsgerätes 1000 in einem zweiten Betriebsmodus. Hier wurden beide Luftfiltereinheiten 450, 550 jeweils um 90° in der gleichen Schwenkrichtung um ihre jeweilige Schwenkachse 455, 555 gedreht. Eine hier nicht gezeigte Steuereinrichtung des Doppel-Lüftungsgerätes 1000 ist ausgebildet, das Filtersteuersignal in Reaktion auf ein Informationssignal über den Betriebszustand des jeweiligen bidirektionalen Ventilators derart auszugeben, dass eine Schwenkbewegung der jeweiligen Luftfiltereinheit der ersten und der zweiten Luftführungseinrichtung erfolgt, wenn eine Änderung einer Drehrichtung des jeweiligen bidirektionalen Ventilators der ersten und der zweiten Luftführungseinrichtung erfolgt. Die Steuereinrichtung ist hier auch zur Steuerung der Ventilatoren 440, 540 im Gegentaktbetrieb ausgebildet, das Informationssignal wird also von der Steuereinrichtung selbst bereitgestellt. Über die Kopplung der Schwenkbewegung der Luftfiltereinheiten 450, 550 an den jeweiligen Betriebszustand des Ventilators 440, 540 ist sichergestellt, dass die Luftfiltereinheiten nur in einer Richtung durchströmt werden. Durch die Konstruktion der Luftfiltereinheit mit nur einem Luftfilter wird erreicht, dass beispielsweise im Zuluftbetrieb der jeweiligen Luftführungseinrichtung, hier der Luftführungseinrichtung 400 der jeweilige Luftfilter 451 vollflächig durchströmt wird, während der Luftfilter 551 der Luftführungseinrichtung 500 in Strömungsrichtung ausgerichtet ist und einen möglichst geringen Strömungswiderstand bietet. Fig. 3d zeigt die zugehörige Schnittansicht in der Schnittebene A-A. Hier ist deutlich zu erkennen, dass die Luftfiltereinheit 550 der zweiten Luftführungseinrichtung 500 aus dem Luftstrom gedreht ist und in Strömungsrichtung ausgerichtet ist, während der Luftfilter 451 der Luftfiltereinheit 450 vollflächig durchströmt wird.

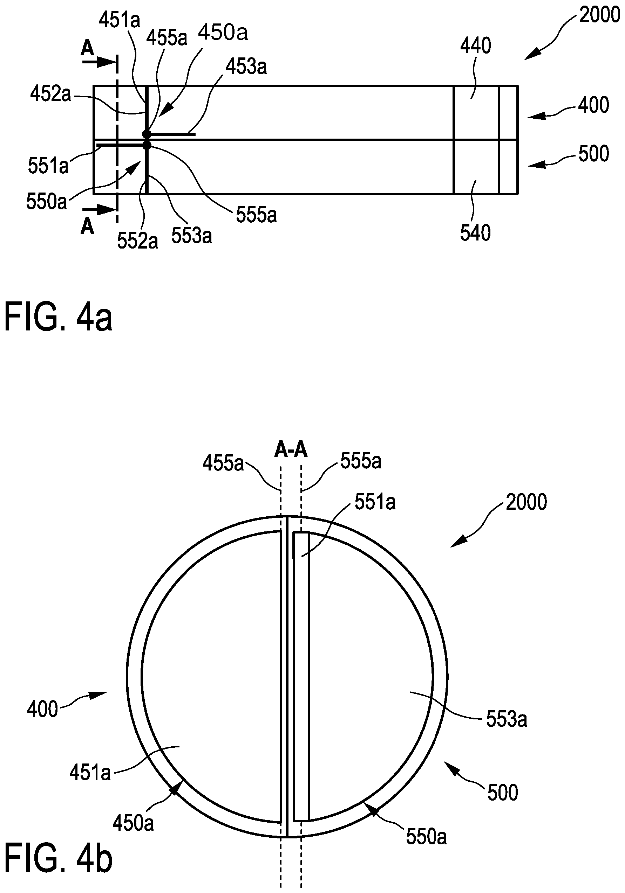

Fig. 4a zeigt eine schematische Darstellung eines weiteren Ausführungsbeispiels eines Doppel-Lüftungsgerätes 2000 in der Draufsicht, Fig. 4b zeigt die zugehörige Schnittansicht in der Schnittebene A-A. Das Lüftungsgerät 2000 unterscheidet sich vom in Fig. 3a bis 3d dargestellten Lüftungsgerät nur durch die Ausgestaltung der Luftfiltereinheiten 450a und 550a. In Bezug auf die weiteren Elemente des Lüftungsgerätes 2000 wird daher auf die Beschreibung der Fig. 3a bis 3d verwiesen.

Die Luftfiltereinheiten 450a, 550a weisen Filteraufnahmen 452a und 552a auf, die zur Aufnahme von jeweils zwei Luftfiltern 451a, 453a und 551a, 553a ausgebildet sind. Mit diesen Luftfiltereinheiten ist ein einfacher Wechsel zwischen den Luftfiltern 451a und 453a in der ersten Luftführungseinrichtung 400 beziehungsweise in der zweiten Luftführungseinrichtung 500 möglich. Dieser kann mit Hilfe der hier nicht dargestellten Steuereinrichtung automatisch über die Veranlassung des Stellantriebes zur Schwenkbewegung der Luftfiltereinheiten 450a, 550a um einen vordefinierten Winkel, hier 90°, um die jeweilige Schwenkachse 455a, 555a erfolgen, bevorzugt in Abhängigkeit vom Betriebszustand der Ventilatoren 440, 540, so dass bei Änderung der Drehrichtung der Ventilatoren eine Schwenkbewegung der Luftfiltereinheiten 450a, 550a und damit ein Filterwechsel erfolgt und jeder Luftfilter somit immer in der gleichen Richtung durchströmt wird. Bei der Verwendung unterschiedlicher Filtertypen als Luftfilter 451a und 453a, beziehungsweise 551a und 553a können auch unterschiedliche Filtertypen für Zu- und Abluftbetrieb verwendet werden. Alternativ kann die Steuereinheit auch ausgebildet sein, eine Schwenkbewegung der Luftfiltereinheiten 450a, 550a unabhängig vom Betriebszustand des Ventilators zu einem vorbestimmten Zeitpunkt zu veranlassen, so dass beispielsweise über längere Zeiträume wie im Frühling oder aber auch tagsüber bei höheren Schadstoffemissionen unterschiedliche Luftfilter in den Luftführungseinrichtungen durchströmt werden. Fig. 4b zeigt das Lüftungsgerät 2000 in einer Schnittansicht in der Schnittebene A-A. Der Luftfilter 551a ist aus der Strömung gedreht, während die Luftfilter 553a und 451a vollflächig durchströmt werden. Luftfilter 453a ist ebenfalls aus der Strömung gedreht aber in Richtung des Ventilators und daher in dieser Darstellung nicht zu erkennen.

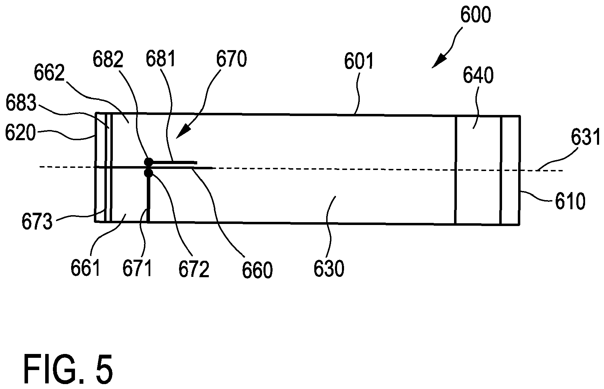

Fig. 5 zeigt in einer schematischen Darstellung in der Draufsicht eine Luftführungseinrichtung 600 zur Innenraumbelüftung mit einem Gehäuse 601, einem innenraumseitigen Auslass 610, einem außenseitigen Auslass 620 und einem Strömungsraum 630, der sich entlang einer Längsachse 631 vom innenraumseitigen Auslass 610 zum außenseitigen Auslass 620 erstreckt und in dem ein bidirektional betreibbarer Ventilator 640 angeordnet ist. Die Luftführungseinrichtung weist ein Luftfiltersystem 670 auf, das einen Trennsteg 660 hat, der den Strömungsraum 630 partiell in einen ersten Strömungsunterraum 661 und einen zweiten Strömungsunterraum 662 teilt und der entlang der Längsachse 631 angeordnet ist. Im ersten Strömungsunterraum 661 ist ein erster Luftfilter 673 und im zweiten Strömungsunterraum 662 ist ein zweiter Luftfilter 683 angeordnet. Desweiteren weist das Luftfiltersystem eine um eine erste Schwenkachse 672 schwenkbar gelagerte erste Klappeneinheit 671 im ersten Strömungsunterraum 661 auf, wobei die Schwenkachse 672 senkrecht zur Längsachse 631 des Strömungsraumes 630 angeordnet ist, und eine um eine zweite Schwenkachse 682 schwenkbar gelagerte zweite Klappeneinheit 681 im zweiten Strömungsunterraum 662, wobei die Schwenkachse 682 senkrecht zur Längsachse 631 des Strömungsraumes 630 angeordnet ist. Die erste und zweite Klappeneinheit sind jeweils zwischen einer geöffneten und einer geschlossenen Stellung verstellbar, wobei in der jeweiligen geschlossenen Stellung der Luftstrom im jeweiligen Strömungsunterraum blockiert ist.

Die erste und zweite Klappeneinheit 671, 681 sind mit einem gemeinsamen Stellantrieb (hier nicht dargestellt) zur Schwenkbewegung der jeweiligen Klappeneinheit um die jeweilige Schwenkachse 672, 682 verbunden. Der bidirektional betreibbare Ventilator 640 ist ausgebildet und angeordnet, einen Luftstrom gegenläufigen Strömungsrichtungen zu fördern. Je nach Strömungsrichtung dient entweder der innenraumseitige Auslass oder der außenseitige Auslass als Einlass oder Auslass für den Luftstrom. In der gezeigten Ausführungsform sind der erste und zweite Luftfilter 673, 683 Filter gleichen Filtertyps.

## Patentansprüche

1. Luftführungseinrichtung (100, 200) zur Führung eines Luftstroms zur Innenraumbelüftung mit einer elektronischen Steuereinheit (270), aufweisend in einem Gehäuse (101, 201):
- einen innenraumseitigen Auslass (110, 210), einen außenseitigen Auslass (120, 220), sowie einen Strömungsraum (130, 230), der sich entlang einer Längsachse (131, 231) vom innenraumseitigem Auslass (110, 210) zum außenseitigem Auslass (120, 220) erstreckt und
- mindestens eine um eine Schwenkachse (155, 255) schwenkbar gelagerte Luftfiltereinheit (150, 250),
- einen mit der Luftfiltereinheit (150, 250) verbundenen Stellantrieb zur Schwenkbewegung der Luftfiltereinheit (150, 250) um die Schwenkachse (155, 255), wobei
- die Schwenkachse (155, 255) senkrecht zur Längsachse (131, 231) des Strömungsraumes (130, 230) angeordnet ist oder wobei
- die Schwenkachse (155, 255) parallel zur Längsachse (131, 231) des Strömungsraumes außerhalb des Strömungsraumes (130, 230) angeordnet ist und wobei
- im Strömungsraum (130, 230) wenigstens ein bidirektional betreibbarer Ventilator (140, 240) angeordnet ist und
- die elektronische Steuereinheit (270) ausgebildet ist, auf den Empfang eines Filtersteuersignals hin den jeweiligen Stellantrieb (260) zu einer Schwenkbewegung der Luftfiltereinheit (250) zu veranlassen.

2. Luftführungseinrichtung (100, 200) nach Anspruch 1, bei der die Luftfiltereinheit (150, 250) eine Filteraufnahme zur Aufnahme mindestens eines Filters umfasst.

3. Luftführungseinrichtung (200) nach Anspruch 2, bei der die Luftfiltereinheit (250) eine Filteraufnahme mit genau zwei Luftfiltern (251, 253) umfasst, die um 90° versetzt zueinander angeordnet sind und eine gemeinsame Schwenkachse (255) aufweisen, die mittig in jedem der beiden Luftfilter (251, 253) angeordnet ist.

4. Luftführungseinrichtung (200) nach einem der vorstehenden Ansprüche, bei dem die Luftfiltereinheit (250) mindestens zwei Luftfilter (251, 253) umfasst, wobei es sich bei den mindestens zwei Filtern um Luftfilter (251, 253) jeweils unterschiedlichen Filtertyps handelt.

5. Luftführungseinrichtung (600) zur Führung eines Luftstroms zur Innenraumbelüftung mit einer elektronischen Steuereinheit (270), aufweisend in einem Gehäuse (601):
- einen innenraumseitigen Auslass (610), einen außenseitigen Auslass (620), sowie einen Strömungsraum (630), der sich entlang einer Längsachse (631) vom innenraumseitigem Auslass (610) zum außenseitigem Auslass (620) erstreckt und
- ein Luftfiltersystem (670) umfassend:
- einen zumindest in einem Teilbereich des Gehäuses entlang der Längsachse (631) angeordneten Trennsteg (660) zur partiellen oder vollständigen Teilung des Strömungsraumes (630) in einen ersten und zweiten Strömungsunterrraum (661, 662),
- einen im ersten Strömungsunterraum (661) angeordneten ersten Luftfilter (673) und einen im zweiten Strömungsunterraum (662) angeordneten zweiten Luftfilter (683)
- eine erste im ersten Strömungsunterraum (661) angeordnete, um eine erste Schwenkachse (672) schwenkbar gelagerte Klappeneinheit (671) und eine zweite im zweiten Strömungsunterraum (662) angeordnete, um eine zweite Schwenkachse (682) schwenkbar gelagerte Klappeneinheit (681), die jeweils zwischen einer geöffneten und einer geschlossenen Stellung verstellbar sind, wobei in der jeweiligen geschlossenen Stellung der Luftstrom im jeweiligen Strömungsunterraum (661, 662) blockiert ist, und
- einen mit der ersten Klappeneinheit (671) verbundenen ersten Stellantrieb zur Schwenk-bewegung der ersten Klappeneinheit (671) und einen mit der zweiten Klappeneinheit (672) verbundenen zweiten Stellantrieb zur Schwenkbewegung der zweiten Klappeneinheit (681) um die jeweilige Schwenkachse (672, 682), wobei
- die jeweilige Schwenkachse (672, 682) senkrecht zur Längsachse (631) des Strömungsraumes (630) angeordnet ist und wobei
- im Strömungsraum (630) wenigstens ein bidirektional betreibbarer Ventilator (640) angeordnet ist und
- die elektronische Steuereinheit (270) ausgebildet ist, auf den Empfang eines Filtersteuersignals hin den jeweiligen Stellantrieb (260) zu einer Schwenkbewegung der ersten und zweiten Klappeneinheit (671, 681) durch um einen durch das Filtersteuersignal vordefinierten Winkel zu veranlassen.

6. Luftführungseinrichtung (600) nach Anspruch 5, bei der die erste und zweite Klappeneinheit (671, 681) über einen gemeinsamen Stellantrieb verfügen, der ausgebildet ist, die Schwenkbewegungen der beiden Klappeneinheiten (671, 681) gleichzeitig zu bewirken

7. Lüftungsgerät (300), das eine Luftführungseinrichtung (100) nach einem der vorstehenden Ansprüche aufweist, weiter aufweisend eine Steuereinrichtung (280), die ausgebildet ist, das Filtersteuersignal in Reaktion auf ein Informationssignal über einen Betriebszustand des bidirektionalen Ventilators (140) derart auszugeben, dass eine Schwenkbewegung der Luftfiltereinheit (250) oder der ersten und zweiten Klappeneinheit (671, 681) erfolgt, wenn eine Änderung einer Drehrichtung des bidirektionalen Ventilators (140) erfolgt.

8. Lüftungsgerät (300) nach Anspruch 7, das eine Luftführungseinrichtung (100) nach Anspruch 3 oder 5 aufweist und bei dem der vordefinierte Winkel 90° beträgt.

9. Lüftungsgerät (300) nach Anspruch 7, aufweisend eine Steuereinrichtung (280), die ausgebildet ist, das Filtersteuersignal nach einem vorbestimmten Zeitintervall beginnend am Zeitpunkt der Inbetriebnahme oder zu einem vorbestimmten Zeitpunkt auszugeben.

10. Doppel-Lüftungsgerät (1000, 2000) aufweisend eine erste und eine zweite Luftführungseinrichtung (400, 500) nach Anspruch 1 mit jeweils einer Luftfiltereinheit (450, 550, 450a, 550a) und eine elektronische Steuereinheit, die ausgebildet ist, auf den Empfang eines Filtersteuersignals hin eine jeweilige Schwenkbewegung der jeweiligen Luftfiltereinheit (450, 550, 450a, 550a) der ersten und der zweiten Luftführungseinrichtung (400, 500) durch den jeweiligen Stellantrieb gleichzeitig um einen durch das Filtersteuersignal vordefinierten Winkel zu veranlassen.

11. Doppel-Lüftungsgerät (1000, 2000) nach Anspruch 10, bei dem die erste und zweite Luftführungseinrichtung (400, 500) über einen gemeinsamen Stellantrieb (260) verfügen, der ausgebildet ist, die Schwenkbewegungen der beiden Luftfiltereinheiten (450, 550, 450a, 550a) gleichzeitig zu bewirken.

12. Doppel-Lüftungsgerät (1000, 2000) nach einem der Ansprüche 10 oder 11, bei dem die Steuereinheit ausgebildet ist, die Schwenkbewegungen der beiden Luftfiltereinheiten (450, 550, 450a, 550a) in dieselbe Schwenkrichtung zu veranlassen.

13. Doppel-Lüftungsgerät (1000, 2000) nach Anspruch 10 bis 11, aufweisend eine Steuereinrichtung, die ausgebildet ist, das Filtersteuersignal in Reaktion auf ein Informationssignal über einen Betriebszustand des jeweiligen bidirektionalen Ventilators (440, 540) derart auszugeben, dass eine Schwenkbewegung der jeweiligen Luftfiltereinheit (450, 550, 450a, 550a) der ersten und der zweiten Luftführungseinrichtung (400, 500) erfolgt, wenn eine Änderung einer Drehrichtung des jeweiligen bidirektionalen Ventilators (440, 540) der ersten und der zweiten Luftführungseinrichtung (400, 500) erfolgt.

## Claims

1. Ventilation device (100, 200) for guiding an airflow for interior ventilation, having an electronic control unit (270), comprising, in a housing (101, 201):
- an interior outlet (110, 210), an exterior outlet (120, 220) and a flow space (130, 230) that extends along a longitudinal axis (131, 231) from the interior outlet (110, 210) to the exterior outlet (120, 220), and
- at least one air filter unit (150, 250) mounted swivellably about a swivel axis (155, 255)
- an actuator connected to the air filter unit (150, 250) for swivelling movement of the air filter unit (150, 250) about the swivel axis (155, 255), wherein
- the swivel axis (155, 255) is arranged perpendicular to the longitudinal axis (131, 231) of the flow space (130, 230), or wherein
- the swivel axis (155, 255) is arranged parallel to the longitudinal axis (131, 231) of the flow space outside of the flow space (130, 230), and wherein
- at least one bidirectionally operating fan (140, 240) is arranged in the flow space (130, 230) and
- the electronic control unit (270) is designed to actuate the respective actuator (260) to a swivelling movement of the air filter unit (250), on reception of a filter control signal.

2. Ventilation device (100, 200) according to claim 1, in which the air filter unit (150, 250) comprises a filter holder for holding at least one filter.

3. Ventilation device (200) according to claim 2, in which the air filter unit (250) comprises a filter holder with exactly two air filters (251, 253), which are arranged offset by 90° with respect to each other and have a common swivel axis (255) that is arranged centrally in each of the two air filters (251, 253).

4. Ventilation device (200) according to any one of the preceding claims, in which the air filter unit (250) comprises at least two air filters (251, 253), wherein the at least two filters are air filters (251, 253) of respectively different filter types.

5. Ventilation device (600) for guiding an airflow for interior ventilation, having an electronic control unit (270) and comprising, in a housing (601):
- an interior outlet (610), an exterior outlet (620) and a flow space (630) that extends along a longitudinal axis (631) from the interior outlet (610) to the exterior outlet (620), and
- an air filter system (670) comprising:
- a partition (660) arranged along the longitudinal axis (631) at least in a subregion of the housing, in order to partially or fully separate the flow space (630) into a first and second flow subspace (661, 662),
- a first air filter (673) arranged in the first flow subspace (661) and a second air filter (683) arranged in the second flow subspace (662)
- a first shutter unit (671) arranged in the first flow subspace (661), mounted swivellably about a first swivel axis (672), and a second shutter unit (681) arranged in the second flow subspace (662), mounted swivellably about a second swivel axis (682), which can be respectively adjusted between an open and a closed position, wherein in the respective closed position the airflow is blocked in the respective flow subspace (661, 662), and
- a first actuator connected to the first shutter unit (671) for swivelling movement of the first shutter unit (671) and a second actuator connected to the second shutter unit (672) for swivelling movement of the second shutter unit (681) about the respective swivel axis (672, 682), wherein
- the respective swivel axis (672, 682) is arranged perpendicular to the longitudinal axis (631) of the flow space (630), and wherein
- at least one bidirectionally operating fan (640) is arranged in the flow space(630) and
- the electronic control unit (270) is designed to actuate the respective actuator (260) to a swivelling movement of the first and second shutter units (671, 681), on reception of a filter control signal, through an angle that is predefined by the filter control signal.

6. Ventilation device (600) according to claim 5, in which the first and second shutter units (671, 681) have a common actuator, which is designed to bring about the swivelling movements of the two shutter units (671, 681) simultaneously.

7. Ventilation unit (300) having a ventilation device (100) according to any one of the preceding claims, further comprising a control unit (280) that is designed to output the filter control signal in response to an information signal relating to an operating state of the bidirectional fan (140), such that a swivelling movement of the air filter unit (250) or of the first and second shutter unit (671, 681) occurs if a change occurs in a direction of rotation of the bidirectional fan (140).

8. Ventilation unit (300) according to claim 7, which comprises a ventilation device (100) according to claim 3 or 5 and in which the predefined angle has the value of 90°.

9. Ventilation unit (300) according to claim 7, comprising a control unit (280), which is designed to output the filter control signal after a predetermined time interval beginning at the time of start-up or at a predetermined time.

10. Double ventilation unit (1000, 2000) comprising a first and a second ventilation device (400, 500) according to claim 1, each having an air filter unit (450, 550, 450a, 550a) and an electronic control unit which is designed, on receipt of a filter control signal, to actuate a respective swivelling movement of the respective air filter unit (450, 550, 450a, 550a) of the first and the second ventilation device (400, 500) by the respective actuator simultaneously through an angle predetermined by the filter control signal.

11. Double ventilation unit (1000, 2000) according to claim 10, in which the first and second air guidance units (400, 500) have a common actuator (260) that is designed to effect the swivelling movements of the two air filter units (450, 550, 450a, 550a) simultaneously.

12. Double ventilation unit (1000, 2000) according to one of claims 10 or 11, in which the control unit is designed to actuate the swivelling movements of the two air filter units (450, 550, 450a, 550a) in the same swivel direction.

13. Double ventilation unit (1000, 2000) according to claim 10 to 11, comprising a control unit which is designed to output the filter control signal in response to an information signal relating to an operating state of the respective bidirectional fan (440, 540), such that a swivelling movement of the respective air filter unit (450, 550, 450a, 550a) of the first and the second ventilation device (400, 500) occurs if a change occurs in a direction of rotation of the respective bidirectional fan (440, 540) of the first and the second ventilation device (400, 500).

## Revendications

1. Dispositif de guidage d'air (100, 200) pour le guidage d'un flux d'air pour la ventilation d'un espace intérieur avec une unité de commande électronique (270), comprenant, dans un boîtier (101, 201) :
- une sortie côté intérieur (110, 210), une sortie côté extérieur (120, 220) ainsi qu'un espace d'écoulement (130, 230) qui s'étend le long de l'axe longitudinal (131, 231) de la sortie côté intérieur (110, 210) vers la sortie côté extérieur (120, 220) et
- au moins une unité de filtrage d'air (150, 250) montée de manière pivotante autour d'un axe de pivotement (155, 255),
- un actionneur relié avec l'unité de filtrage d'air (150, 250) pour le mouvement de pivotement de l'unité de filtrage d'air (150, 250) autour de l'axe de pivotement (155, 255), dans lequel
- l'axe de pivotement (155, 255) est disposé perpendiculairement à l'axe longitudinal (131, 231) de l'espace d'écoulement (130, 230) ou dans lequel
- l'axe de pivotement (155, 255) est disposé parallèlement à l'axe longitudinal (131, 231) de l'espace d'écoulement à l'extérieur de l'espace d'écoulement (130, 230) et dans lequel
- dans l'espace d'écoulement (130, 230), est disposé au moins un ventilateur (140, 240) pouvant fonctionner de manière bidirectionnelle et
- l'unité de commande électronique (270) est conçue pour faire en sorte, lors de la réception d'un signal de filtrage d'air, que l'actionneur (260) provoque un mouvement de pivotement de l'unité de filtrage d'air (250).

2. Dispositif de guidage d'air (100, 200) selon la revendication 1, dans lequel l'unité de filtrage d'air (150, 250) comprend un logement de filtre pour le logement d'au moins un filtre.

3. Dispositif de guidage d'air (200) selon la revendication 2, dans lequel l'unité de filtrage d'air (250) comprend un logement de filtre avec exactement deux filtres à air (251, 253), qui sont disposés de manière décalée de 90° et qui comprennent un axe de pivotement (255) commun, qui est disposé au centre dans chacun des deux filtres à air (251, 253).

4. Dispositif de guidage d'air (200) selon l'une des revendications précédentes, dans lequel l'unité de filtrage d'air (250) comprend au moins deux filtres à air (251, 253), dans lequel les au moins deux filtres à air (251, 253) sont de types différents.

5. Dispositif de guidage d'air (600) pour le guidage d'un flux d'air pour la ventilation intérieure avec une unité de commande électronique (270), comprenant, dans un boîtier (601) :
- une sortie côté intérieur (610), une sortie côté extérieur (620) ainsi qu'un espace d'écoulement (630) qui s'étend le long de l'axe longitudinal (631) de la sortie côté intérieur (610) vers la sortie côté extérieur (620) et
- un système de filtrage d'air (670) comprenant :
- une nervure de séparation (660) disposée au moins dans une partie du boîtier le long de l'axe longitudinal (631) pour la séparation partielle ou complète de l'espace d'écoulement (630) en un premier et un deuxième sous-espaces d'écoulement (661, 662),
- un premier filtre à air (673) disposé dans un premier sous-espace d'écoulement (661) et un deuxième filtre à air (683) disposé dans un deuxième sous-espace d'écoulement (662),
- une première unité de clapet (671) disposée dans le premier sous-espace d'écoulement (661), montée de manière pivotante autour d'un premier axe de pivotement (672) et une deuxième unité de clapet (681) disposée dans le deuxième sous-espace d'écoulement (662), montée de manière pivotante autour d'un deuxième axe de pivotement (682), qui peuvent chacun être déplacées entre une position ouverte et une position fermée, dans lequel, dans la position fermée, le flux d'air dans le sous-espace d'écoulement (661, 662) respectif est bloqué et
- un premier actionneur, relié avec la première unité de clapet (671), pour le mouvement de pivotement de la première unité de clapet (671) et un deuxième actionneur, relié avec la deuxième unité de clapet (672), pour le mouvement de pivotement de la deuxième unité de clapet (681) autour de l'axe de pivotement (672, 682) respectif, dans lequel
- l'axe de pivotement (672, 382) respectif est disposé perpendiculairement à l'axe longitudinal (631) de l'espace d'écoulement (630) et dans lequel
- dans l'espace d'écoulement (630), est disposé au moins un ventilateur (640) fonctionnant de manière bidirectionnelle et
- l'unité de commande électronique (270) est conçue pour faire en sorte, lors de la réception d'un signal de commande de filtrage, que l'actionneur (260) respectif provoque un mouvement de pivotement de la première et de la deuxième unités de clapets (671, 681) d'un angle prédéfini par le signal de commande de filtrage.

6. Dispositif de guidage d'air (600) selon la revendication 5, dans lequel les première et deuxième unités de clapets (671, 681) sont munis d'un actionneur commun qui est conçu pour provoquer les mouvements de pivotement des deux unités de clapets (671, 681) simultanément.

7. Appareil de ventilation (300), qui comprend un dispositif de guidage d'air (100) selon l'une des revendications précédentes, comprenant en outre un dispositif de commande (280) qui est conçu pour émettre le signal de commande filtrage en réaction à un signal d'information concernant un état de fonctionnement du ventilateur bidirectionnel (140) de façon à ce qu'un mouvement de pivotement de l'unité de filtrage d'air (250) ou des première et deuxième unités de clapets (671, 681) est effectué lorsqu'une modification d'un sens de rotation du ventilateur bidirectionnel (140) a lieu.

8. Appareil de ventilation (300) selon la revendication 7, qui comprend un dispositif de guidage d'air (100) selon la revendication 3 ou 5 et dans lequel l'angle prédéfini est de 90°.

9. Appareil de ventilation (300) selon la revendication 7, comprenant un dispositif de commande (280) qui est conçu pour émettre le signal de commande de filtrage après un intervalle de temps prédéterminé à partir du moment de la mise en service ou à un moment prédéterminé.

10. Double appareil de ventilation (1000, 2000) comprenant un premier et un deuxième dispositifs de guidage d'air (400, 500) selon la revendication 1, avec chacun une unité de filtrage d'air (450, 550, 450a, 550a) et une unité de commande électronique, qui est conçue pour provoquer, lors de la réception d'un signal de commande de filtrage, un mouvement de pivotement de l'unité de filtrage d'air (450, 550, 450a, 550a) respective des première et deuxième dispositifs de guidage d'air (400, 500) simultanément à l'aide de l'actionneur respectif d'un angle prédéfini par le signal de commande de filtrage.

11. Double appareil de ventilation (1000, 2000) selon la revendication 10, dans lequel les premier et deuxième dispositifs de guidage d'air (400, 500) sont munis d'un actionneur commun (260) qui est conçu pour provoquer simultanément les mouvements de pivotement des deux unités de filtrage d'air (450, 550, 450a, 550a).

12. Double appareil de ventilation (1000, 2000) selon l'une des revendications 10 ou 11, dans lequel l'unité de commande est conçue pour provoquer les mouvements de pivotement des deux unités de filtrage d'air (450, 550, 450a, 550a) dans le même sens de pivotement.

13. Double appareil de ventilation (1000, 2000) selon la revendication 10 à 11, comprenant un dispositif de commande qui est conçu pour émettre le signal de commande de filtrage en réaction à un signal d'information concernant un état de fonctionnement du ventilateur bidirectionnel (440, 540) respectif, de façon à ce qu'un mouvement de pivotement de l'unité de filtrage d'air (450, 550, 450a, 550a) respective des première et deuxième dispositifs de guidage d'air (400, 500) ait lieu lors d'une modification d'un sens de rotation du ventilateur bidirectionnel (440, 540) respectif des première et deuxième dispositifs de guidage d'air (400, 500).
